(19) Europäisches Patentamt
European Patent Office
Office européen des brevets

(11) EP 4 796 974 A1

(12) **EUROPEAN PATENT APPLICATION**
published in accordance with Art. 153(4) EPC

(43) Date of publication:
**26.08.2026 Bulletin 2026/35**

(21) Application number: **24879959.5**

(22) Date of filing: **09.09.2024**

(51) International Patent Classification (IPC):
***G02B 21/36*** *(2006.01)* ***G06T 5/70*** *(2024.01)*
***G06T 5/50*** *(2006.01)*

(52) Cooperative Patent Classification (CPC):
**G02B 21/36; G06T 5/00; G06T 5/50; G06T 5/70**

(86) International application number:
**PCT/KR2024/013602**

(87) International publication number:
**WO 2025/084620 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023 KR 20230138409**

(71) Applicant: **Daegu Gyeongbuk Institute of Science and Technology**
**Daegu 42988 (KR)**

(72) Inventors:
- **LEE, Jong Chan**
  **Dalseong-gun, Daegu 43019 (KR)**
- **JEONG, Se Joo**
  **Dalseong-gun, Daegu 42988 (KR)**
- **KO, Dong Bin**
  **Seoul 08649 (KR)**
- **KIM, Jae Yong**
  **Dalseong-gun, Daegu 42995 (KR)**

(74) Representative: **Studio Torta S.p.A.**
**Via Viotti, 9**
**10121 Torino (IT)**

# (54) STED MICROSCOPE IMAGE PROCESSING METHOD AND STED MICROSCOPE SYSTEM

(57) The present invention provides a STED microscope image processing method and a STED microscope system, the method comprising the steps of: obtaining a first STED image by using a first main image, which is obtained by emitting an excitation laser beam and a first STED laser beam at an object being measured, and a first auxiliary image, which is obtained by emitting only the first STED laser beam at the object being measured; obtaining a second STED image by using a second main image, which is obtained by emitting, at the object being measured, the excitation laser beam and a second STED laser beam of an intensity different from that of the first STED laser beam, and a second auxiliary image, which is obtained by emitting only the second STED laser beam at the object being measured; and using the first STED image and the second STED image so as to obtain a final image from which background noise is removed.

FIG. 1

10
SP
331
321
312
332a
332b
311
312
313
310
321
322
323
320
331
332a
332b
333
330
3231
3232
323
FL
311
STED
322
EX
333
200
100
CON
400

EP 4 796 974 A1

## Description

### Technical Field

The present disclosure relates to a stimulated emission depletion (STED) microscope image processing method and a STED microscope system.

### Background Art

Recently, fluorescence microscopes, which offer relatively superior vertical resolution compared to traditional optical microscopes, are being applied to the imaging of samples such as biological specimens. Among the fluorescence microscopes, stimulated emission depletion (STED) fluorescence microscopes (hereinafter referred to as "STED microscopes"), which are of a type of fluorescence microscope that overcomes the diffraction limit, realize a resolution far superior to that of traditional fluorescence microscopes, using stimulated emission.

Such STED microscopes are based on a confocal microscopy method. More specifically, similar to confocal microscopes, the STED microscopes inject an excitation laser beam (excitation beam) to excite a stained fluorescent material on a sample, and through this excitation process, the fluorescent material in a focal region transitions to an excited state.

In the case of typical fluorescence microscopes, images are obtained by detecting spontaneous emission occurring from an excited fluorescent material, and the resolution of the images depends on the specifications of lens. In contrast, in the case of the STED microscopes, a donut-shaped depletion beam is focused on an outer edge of a focal plane, causing stimulated emission at the outer edge of an excited region and spontaneous emission at the center. In this case, selectively obtaining only the spontaneously emitted photons to form an image may enable achievement of a far smaller effective point spread function (PSF) compared to traditional confocal microscopes, resulting in better resolution.

Meanwhile, images obtained by typical STED microscopes include specific background noise. It is classified into direct excitation noise (DEN) which occurs by a strong STED laser beam, and incomplete depletion noise (IDN) which occurs when a STED laser beam fails to sufficiently deplete an excitation laser beam.

In images obtained by typical STED microscopes, the intensity of background noise may be stronger than that of actual signals, or the presence of background noise may increase the intensity in a low frequency region, leading to signal loss in a relatively high frequency region and significant degradation of image quality. In addition, there is a challenge in that reducing one of DEN and IDN, which have a conflicting relationship depending on the intensity of a STED laser beam, may cause the other to increase.

### Disclosure of invention

### Technical Goals

The present disclosure aims to provide a stimulated emission depletion (STED) microscope image processing method and a STED microscope system that may obtain a STED image using STED laser beams of different intensities, apply a differential coefficient thereto, and perform image operations, thereby effectively removing background noise.

### Technical Solutions

To achieve the goal described above, an aspect of the present disclosure provides a stimulated emission depletion (STED) microscope image processing method including: obtaining a first STED image by using a first main image that is obtained by emitting an excitation laser beam and a first STED laser beam at a measurement target to be measured and using a first auxiliary image that is obtained by emitting only the first STED laser beam at the measurement target; obtaining a second STED image by using a second main image that is obtained by emitting, at the measurement target, the excitation laser beam and a second STED laser beam with an intensity different from that of the first STED laser beam and using a second auxiliary image that is obtained by emitting only the second STED laser beam at the measurement target; and obtaining a final image from which background noise is removed, using the first STED image and the second STED image.

### Effects of Invention

A stimulated emission depletion (STED) microscope image processing method according to an embodiment of the present disclosure may effectively suppress two types of background noise-direct excitation noise (DEN) and incomplete depletion noise (IDN)-in images obtained through a typical STED microscope. It may also improve the

resolution of the images, thereby enhancing image quality and analysis accuracy.

A STED microscope image processing method according to an embodiment of the present disclosure may reduce the intensity of a STED laser beam required to be emitted at a sample to obtain images of the same resolution, thereby reducing the risk of photobleaching of fluorescent body and damage to the sample.

A STED microscope system according to an embodiment of the present disclosure may obtain images with improved background noise and resolution, only using a controller, without the need for additional equipment.

**Brief Description of Drawings**

FIG. 1 is a diagram illustrating a stimulated emission depletion (STED) microscope system according to an embodiment of the present disclosure.

FIGS. and 3 are diagrams illustrating a STED microscope image processing method according to an embodiment of the present disclosure.

FIG. 4 is a conceptual diagram showing a relationship between images obtained at respective steps of FIG. 2.

FIGS. 5 and 6 are diagrams illustrating a comparison between images obtained from a traditional microscope system and images obtained from the STED microscope system of FIG. 1.

**Best Mode for Carrying Out the Invention**

An aspect of the present disclosure provides a stimulated emission depletion (STED) microscope image processing method including: obtaining a first STED image by using a first main image that is obtained by emitting an excitation laser beam and a first STED laser beam at a measurement target to be measured and using a first auxiliary image that is obtained by emitting only the first STED laser beam at the measurement target; obtaining a second STED image by using a second main image that is obtained by emitting, at the measurement target, the excitation laser beam and a second STED laser beam with an intensity different from that of the first STED laser beam, and using a second auxiliary image that is obtained by emitting only the second STED laser beam at the measurement target; and obtaining a final image from which background noise is removed by using the first STED image and the second STED image.

In addition, the obtaining of the final image may include: determining a differential coefficient using the first STED image and the second STED image; and generating the final image using the differential coefficient, the first STED image, and the second STED image.

In addition, the generating of the final image may include: obtaining a result value from an intermediate image obtained by performing a first operation using the differential coefficient, the first STED image, and the second STED image; and in response to the result value satisfying a preset criterion, outputting the intermediate image as the final image.

In addition, the generating of the final image may further include: in response to the result value not satisfying the preset criterion, resetting the differential coefficient, and re-obtaining the result value from an intermediate image obtained by re-performing the first operation.

In addition, the first operation is multiplying the second STED image by the differential coefficient and subtracting it from the first STED image.

In addition, the STED microscope image processing method may further include: adjusting a ratio of the intensities of the first STED laser beam and the second STED laser beam based on a background noise score and a resolution score of the final image.

In addition, the intensity of the first STED laser beam is greater than the intensity of the second STED laser beam.

Another aspect of the present disclosure provides a STED microscope system including: a first laser generation unit configured to generate an excitation laser beam; a second laser generation unit configured to generate a first STED laser beam and a second STED laser beam with different intensities; an optical unit configured to set an optical path so that the excitation laser beam, the first STED laser beam, and the second STED laser beam are emitted at a measurement target to be measured; and a controller configured to obtain a final image by controlling operations of the first laser generation unit and the second laser generation unit, wherein the controller is configured to: obtain a plurality of STED images by emitting, at the measurement target, at least one of the excitation laser beam, the first STED laser beam, or the second STED laser beam; and obtain a final image from which background noise is removed, using the plurality of STED images.

In addition, the controller may be configured to: determine a differential coefficient using the plurality of STED images; obtain a result value from an intermediate image obtained by performing a first operation using the differential coefficient and the plurality of STED images; and in response to the result value satisfying a preset criterion, output the intermediate image as the final image.

In addition, the controller may be configured to: in response to the result value not satisfying the preset criterion,

reset the differential coefficient, and re-obtain a result value from an intermediate image obtained by re-performing the first operation.

**Mode for Carrying Out the Invention**

The structure and operation of the present disclosure on will be described in detail below with reference to the embodiments of the present disclosure illustrated in the accompanying drawings.

The disclosure may be subjected to various modifications and may have various embodiments, and specific embodiments are illustrated in the drawings and described in detail in the detailed description. The effects and features of the present disclosure and the methods for achieving them will become apparent with reference to the embodiments described herein in detail, together with the accompanying drawings. However, the disclosure is not limited to the embodiments disclosed below and may be implemented in various forms.

Hereinafter, embodiments of the present disclosure will be described in detail with reference to the accompanying drawings, and in the following description, the same or corresponding components are given the same reference numerals and descriptions thereof are not repeated.

In the following embodiments, a singular expression includes a plural expression unless the context clearly indicates otherwise.

In the following embodiments, terms such as "include," "have," and the like are intended to specify the presence of a feature or component described herein but do not preclude the presence or addition of one or more other features or components.

If an embodiment is otherwise implementable, a specific process may be performed in an order different from that described herein. For example, two processes described in succession may be performed substantially simultaneously and may also be performed in an order opposite to that described herein.

In the drawings, the size of components may be exaggerated or reduced for convenience of explanation. For example, the size and thickness of each component shown in the drawings are depicted arbitrarily for convenience of explanation, and therefore the following embodiments are not necessarily limited to those depicted.

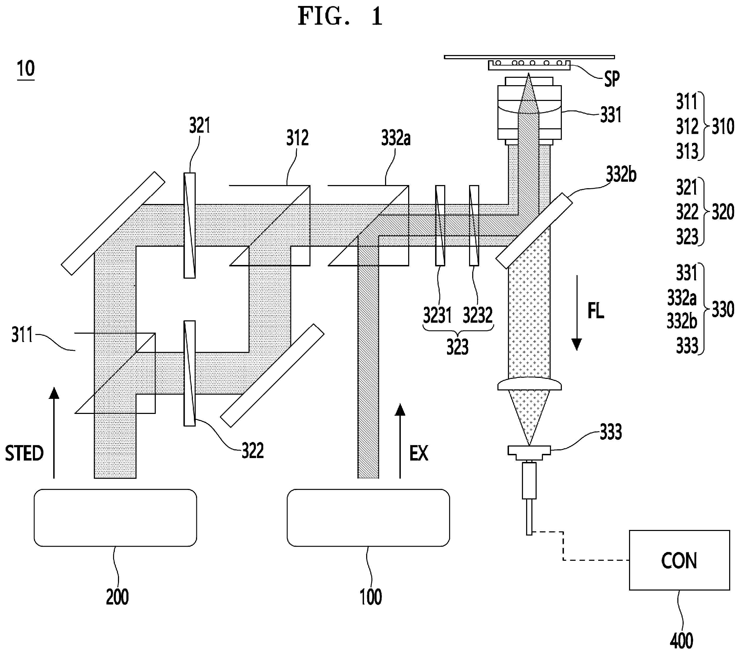

FIG. 1 is a diagram illustrating a stimulated emission depletion (STED) microscope system 10 according to an embodiment of the present disclosure.

Referring to FIG. 1, the STED microscope system 10 may include a first laser generation unit 100, a second laser generation unit 200, an optical unit 300, and a controller 400.

The first laser generation unit 100 may generate an excitation laser beam EX. The first laser generation unit 100 may emit an excitation laser beam EX at a measurement target SP including a fluorescent material. Here, the first laser generation unit 100 may be an excitation light source that generates an excitation laser beam EX.

The second laser generation unit 200 may generate a STED laser beam STED. Here, the second laser generation unit 200 may be a type of STED light source that emits a STED laser beam STED at the measurement target SP.

The second laser generation unit 200 may de-excite the fluorescent material of the measurement target SP that is excited by the excitation laser beam EX. In this case, a wavelength of the STED laser beam STED generated by the second laser generation unit 200 may be different from a wavelength of the excitation laser beam EX. Specifically, the wavelength of the STED laser beam STED may be shorter than that of the excitation laser beam EX.

The second laser generation unit 200 may adjust the intensity of the generated STED laser beam STED. As STED laser beams STED of different intensities may be generated in the second laser generation unit 200, the STED microscope system 10 may obtain a plurality of different STED images.

The optical unit 300 may include an optical separation unit 310, a phase conversion unit 320, and a detection unit 330. The optical unit 300 may align the excitation laser beam EX and the STED laser beam STED and guide them to the measurement target SP.

The optical separation unit 310 may include at least one beam splitter or polarization beam splitter. The optical separation unit 310 may separate the excitation laser beam EX or the STED laser beam and guide them to different paths. For convenience of explanation, the following description will focus on an embodiment where the optical separation unit 310 is equipped with two polarization beam splitters as shown in FIG. 1.

The optical separation unit 310 may include a first polarization beam splitter 311 and a second polarization beam splitter 312.

The first polarization beam splitter 311 may separate the STED laser beam STED generated by the second laser generation unit 200. In this case, the first polarization beam splitter 311 may guide the STED laser beam STED to be separated into two paths and pass through a first phase plate 321 and a second phase plate 322, which will be described later, respectively.

The first polarization beam splitter 311 may transmit or reflect the STED laser beam STED depending on a polarization state of the STED laser beam STED. The STED laser beam STED separated into two paths by the first

polarization beam splitter 311 may pass through the first phase plate 321 and the second phase plate 322, which will be described later, respectively, and pass through the second polarization beam splitter 312 while in a state with different phases.

The second polarization beam splitter 312 may recombine the STED laser beam STED separated by the first polarization beam splitter 311. In addition, the second polarization beam splitter 312 may guide the excitation laser beam EX toward the measurement target SP.

The phase conversion unit 320 may include a plurality of phase plates. For convenience of explanation, the following description will focus on an embodiment with three phase plates as shown in FIG. 1.

The phase conversion unit 320 may include the first phase plate 321, the second phase plate 322, and a third phase plate 323.

The first phase plate 321 may convert a plane phase of a P-polarized STED laser beam to a donut-shaped phase in which the light intensity in the center region is zero (0).

The second phase plate 322 may convert an axial phase of a S-polarized STED laser beam to a donut-shaped phase in which the light intensity in the center region is zero (0).

The third phase plate 323 may generate a phase difference between the STED laser beam STED and the excitation laser beam EX. Specifically, the third phase plate 323 may include at least one of a half-wave plate (HWP) or a quarter-wave plate (QWP), and FIG. 1 illustrates an embodiment where the third phase plate 323 includes both a HWP 3231 and a QWP 3232.

The detection unit 330 may include a lens module 331, a dichroic mirror 332, and a sensor module 333. The detection unit 330 may detect an image of the measurement target SP using the excitation laser beam EX or the STED laser beam STED guided to the measurement target SP by the optical unit 300.

The lens module 331 may focus a beam reflected from the dichroic mirror 332, which will be described later, onto the measurement target SP. In addition, the lens module 331 may collect fluorescent light FL emitted from the measurement target SP by the excitation laser beam EX or the STED laser beam STED and guide it to the dichroic mirror 332. Here, the lens module 331 may include an objective lens.

The dichroic mirror 332 may reflect the excitation laser beam EX or the STED laser beam STED to guide it to the measurement target SP. In addition, the dichroic mirror 332 may transmit the fluorescent light FL from the measurement target SP to guide it to the sensor module 333.

The detection unit 330 may include one or more dichroic mirrors 332. FIG. 1 illustrates an embodiment where the detection unit includes two dichroic mirrors 332a and 332b. Each of the dichroic mirrors 332a and 332b may transmit or reflect at least one of the excitation laser beam EX, the STED laser beam STED, and the fluorescent light FL to guide the path of light.

The sensor module 333 may sense the fluorescent light FL from the measurement target SP. Information obtained from the sensor module 333 may be transmitted to the controller 400.

For example, the sensor module 333 may include a multimode fiber (MMF) and a single photon counting module (SPCM).

The controller 400 may obtain a final image FIM using the plurality of STED images. The controller 400 may obtain the final image FIM with background noise removed based on the information received from the sensor module 333, and an algorithm therefor will be described in detail below.

Although one embodiment of the STED microscope system 10 has been described above, the STED microscope system 10 is not limited to the configuration described therein but may have additional configurations and operating principles. In addition, the positions and relationships of respective components shown in FIG. 1 may be modified or adjusted.

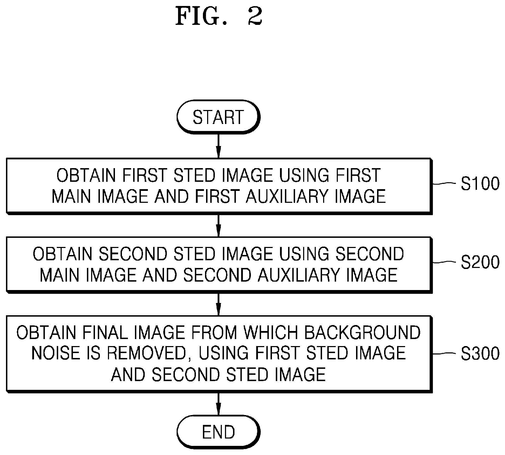

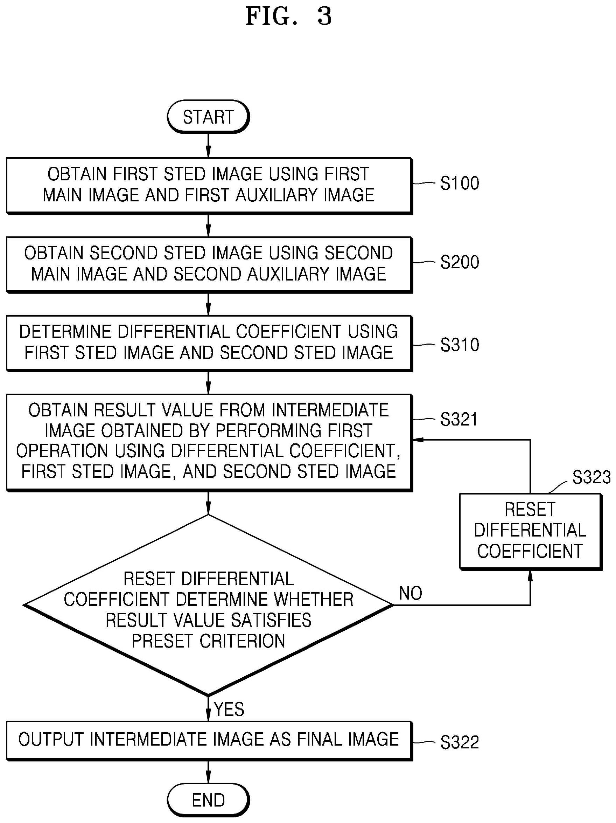

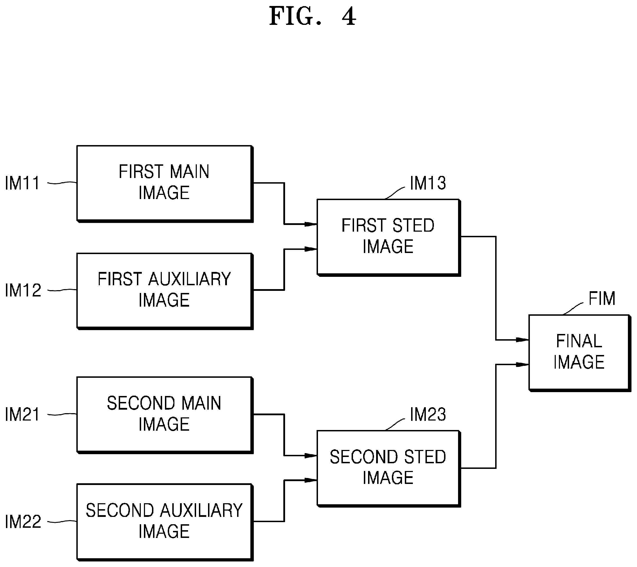

FIGS. 2 and 3 are diagrams illustrating a STED microscope image processing method according to one embodiment of the present disclosure. In addition, FIG. 4 is a conceptual diagram illustrating a relationship between images obtained in respective steps of FIG. 2, and FIG. 5 and FIG. 6 are diagrams illustrating a comparison between images obtained from a traditional microscope system and images obtained from the STED microscope system 10 of FIG. 1.

Referring to FIG. 2, the STED microscope image processing method may include: step S100 of obtaining a first STED image IM13 using a first main image IM11 obtained by emitting an excitation laser beam EX and a first STED laser beam STED1 at a measurement target SP and using a first auxiliary image IM12 obtained by emitting only the first STED laser beam STED1 at the measurement target SP; step S200 of obtaining a second STED image IM23 using a second main image IM21 obtained by emitting, at the measurement target SP, the excitation laser beam EX and a second STED laser beam STED2 having a different intensity from that of the first STED laser beam STED1 and using a second auxiliary image IM22 obtained by emitting only the second STED laser beam STED2 at the measurement target SP; and step S300 of obtaining a final image FIM from which background node is removed, using the first STED image IM13 and the second STED image IM23.

Hereinafter, "DEN" refers to direct excitation noise appearing in a STED image due to a strong STED laser beam,

and "IDN" refers to incomplete depletion noise appearing because a STED laser beam fails to sufficiently deplete an excitation laser beam EX.

The step S100 of obtaining the first STED image IM13 may obtain the first STED image IM13 with the DEN primarily removed, using the first main image IM11 and the first auxiliary image IM12.

The first main image IM11 may be obtained by emitting, at the measurement target SP, the excitation laser beam EX and the first STED laser beam STED1.

When the excitation laser beam EX is emitted at the measurement target SP, electrons in a fluorescent material (fluorophore) of the measurement target SP may be excited and have a high energy level. The first STED laser beam STED1 may be emitted at the same measurement target SP, with a donut-shaped cross-section by a phase conversion unit, lowering the energy level of the electrons excited by the excitation laser beam EX. In this case, energy having the same wavelength as the first STED laser beam STED1 may be emitted, and the fluorophore in a region corresponding to the donut-shaped cross-section of the first STED laser beam STED1 may have a fluorescence reaction that occurs only in a central local region, with its original fluorescence emission phenomenon depleted. This may allow the STED microscope system 10 to obtain the first main image IM11, and the first main image IM11 may include both types of background noise, DEN and IDN.

The first auxiliary image IM12 may be obtained by emitting only the first STED laser beam STED1 at the measurement target SP. When obtaining the first auxiliary image IM12, the excitation laser beam EX is not emitted to the measurement target SP, and thus IDN, which may occur when the first STED laser beam STED1 fails to sufficiently deplete the excitation laser beam EX, may not appear. Meanwhile, DEN appears, as in the first main image IM11, by the first STED laser beam STED1, and in this case, an amount of the DEN may be substantially the same as an amount of DEN appearing in the first main image IM11.

The first STED image IM13 may be obtained using the first main image IM11 and the first auxiliary image IM12. In this case, the first STED image IM13 may be an image from which DEN is primarily removed.

In one embodiment, the first STED image IM13 may be obtained through subtraction using the first main image IM11 and the first auxiliary image IM12. Since the first main image IM11 and the first auxiliary image IM12 have the same amount of DEN, subtracting the first auxiliary image IM12 from the first main image IM11 may yield the first STED image IM13 in which only a main signal and IDN appear.

The step S200 of obtaining the second STED image IM23 may obtain the second STED image IM23 with DEN primarily removed, using the second main image IM21 and the second auxiliary image IM22.

The second main image IM21 may be obtained by emitting, at the measurement target SP, the excitation laser beam EX and the second STED laser beam STED2. In this case, the intensity of the excitation laser beam EX may be the same as the intensity of the excitation laser beam EX emitted to obtain the first main image IM11. Meanwhile, the intensity of the second STED laser beam STED2 may be set differently from the intensity of the first STED laser beam STED1.

The second main image IM21 may include both types of background noise, DEN and IDN. Since the intensities of the first STED laser beam STED1 and the second STED laser beam STED2 are different, the amounts of DEN and IDN appearing in the second main image IM21 may differ from the amounts of DEN and IDN appearing in the first main image IM11.

In one embodiment, the intensity of the second STED laser beam STED2 may be set to be less than the intensity of the first STED laser beam STED1. In this case, since IDN is background noise that appears because the STED laser beam fails to sufficiently deplete the excitation laser beam EX, the amount of IDN appearing in the second STED image IM23 may be greater than the amount of IDN appearing in the first STED image IM13.

For a method of obtaining the second main image IM21 and the second auxiliary image IM22 respectively and using them to obtain the second STED image IM23, reference may be made to the foregoing description of the step S100 of obtaining the first STED image IM13.

Referring to FIGS. 3 and 4, step S300 of obtaining the final image FIM may obtain the final image FIM, using the first STED image IM13 that is obtained using the first main image IM11 and the first auxiliary image IM12 and using the second STED image IM23 that is obtained using the second main image IM21 and the second auxiliary image IM22. In this case, the final image FIM may be an image in which both DEN and IDN have been removed.

The step S300 of obtaining the final image FIM may include step S310 of determining a differential coefficient $\gamma$ using the first STED image IM13 and the second STED image IM23, and step S320 of generating the final image FIM using the differential coefficient $\gamma$, the first STED image IM13, and the second STED image IM23.

The step S310 of determining the differential coefficient $\gamma$ may set the differential coefficient $\gamma$ to obtain an intermediate image to be described later. For example, the controller 400 may set an arbitrary value as an initial differential coefficient $\gamma$, and the initial differential coefficient $\gamma$ may be applied to an operation to initially obtain the intermediate image. In addition, when a result value to be described later does not satisfy a preset criterion, the controller 400 may reset the differential coefficient $\gamma$ and apply it to an operation to re-obtain an intermediate image.

The step S320 of generating the final image FIM may obtain the final image FIM in which both DEN and IDN are removed, using the determined differential coefficient $\gamma$, the first STED image IM13, and the second STED image IM23.

The step S320 of generating the final image FIM may include step S321 of obtaining a result value from an intermediate image obtained by performing a first operation using the differential coefficient $\gamma$, the first STED image IM13, and the second STED image IM23, and step S322 of outputting the intermediate image as the final image FIM when the result value satisfies the preset criterion.

The step S321 of obtaining the result value may apply the determined differential coefficient $\gamma$ to the first operation to obtain the intermediate image from the first STED image IM13 and the second STED image IM23.

In one embodiment, the first operation may be an operation method of multiplying the second STED image IM23 by the differential coefficient $\gamma$ and subtracting it from the first STED image IM13. In this case, the result value may be calculated to determine whether to define an image obtained by performing the first operation as the intermediate image and to output the intermediate image as the final image FIM.

In one embodiment, the result value may be set to various variables to determine whether background noise has been sufficiently removed. For example, the result value may be a minimum value of a point spread function (PSF) of the intermediate image. Alternatively, the result value may be a mean value of the PSF of the intermediate image. For convenience of explanation, the following description will focus on an embodiment where the minimum value of the PSF of the intermediate image is set as the result value.

The step S322 of outputting as the final image FIM may output the intermediate image as the final image FIM, when the result value satisfies the preset criterion.

In one embodiment, when the result value has a value of zero (0) or a positive value close to 0, the controller 400 may determine the intermediate image as the final image FIM and output it.

Specifically, when performing the first operation of multiplying the second STED image IM23 by the differential coefficient $\gamma$ and subtracting it from the first STED image IM13, setting the differential coefficient $\gamma$ to extremely small may not sufficiently remove IDN, and thus a minimum pixel value may be a positive number. In addition, in this case, setting the differential coefficient $\gamma$ to extremely large may also remove even a main signal, and thus the minimum pixel value may be a negative number. Therefore, based on whether the result value is 0 or a sufficiently small positive value, the intermediate image may be output as the final image FIM.

The step S320 of generating the final image FIM may further include step S323 of, when the result value does not satisfy the preset criterion, resetting the differential coefficient $\gamma$ and re-obtaining the result value from an intermediate image obtained by re-performing the first operation.

In one embodiment, when the result value has a positive value, the first operation may be performed again by increasing the differential coefficient $\gamma$. In this case, an increased amount of the differential coefficient $\gamma$ may be appropriately set based on the result value.

In one embodiment, when the result value has a negative value, the first operation may be performed again by decreasing the differential coefficient $\gamma$. In this case, a decreased amount of the differential coefficient $\gamma$ may be appropriately set based on the result value.

Hereinafter, an embodiment where the controller 400 sets the initial differential coefficient $\gamma$ to 0 and obtains the final image FIM while increasing the differential coefficient $\gamma$ by 0.001 will be described. However, as described above, the initial differential coefficient $\gamma$, a variation amount of the differential coefficient $\gamma$, and a method of performing the first operation are not limited to the embodiment.

The controller 400 may perform the first operation by initially setting the differential coefficient $\gamma$ to 0. In this case, the first operation is multiplying the second STED image IM23 by the differential coefficient $\gamma$ and subtracting it from the first STED image IM13. When the differential coefficient $\gamma$ is 0, an intermediate image to be obtained as a result of the first operation may be the same as the first STED image IM13.

Subsequently, the controller 400 may repeat performing the first operation and obtaining the intermediate image, by increasing the differential coefficient $\gamma$ by 0.001 each time. As the differential coefficient $\gamma$ increases, the amount subtracted from the first STED image IM13 increases, and thus more IDN may be removed. However, as described above, the variation amount of the differential coefficient $\gamma$ is not limited to this and may be set in various ways based on conditions such as computational load and the like.

When the result value, that is, a minimum value among image pixel values, in an intermediate image obtained while updating the differential coefficient $\gamma$ is negative, it may indicate a state where IDN has been excessively removed. Accordingly, the controller 400 may determine the intermediate image obtained by applying an immediately previous value of the differential coefficient $\gamma$ as an optimal image with IDN maximally removed and output this image as the final image FIM. In other words, the controller 400 may repeat the process of resetting the differential coefficient $\gamma$ and obtaining the intermediate image until the result value becomes negative.

The STED microscope image processing method may further include step S400 of adjusting a ratio $\eta$ of the intensities of the first STED laser beam STED1 and the second STED laser beam STED2 based on a background noise score and a resolution score of the final image FIM.

The step S400 of adjusting the ratio $\eta$ of intensities of the first STED laser beam STED1 and the second STED laser beam STED2 may adjust the ratio $\eta$ of the intensities of the first STED laser beam STED1 and the second STED laser

beam STED2 to achieve a balanced implementation of two effects of background noise suppression and resolution enhancement.

Since the two effects of background noise suppression and resolution enhancement conflict with each other depending on the ratio η of the intensities of the STED laser beams, the controller 400 may assign weights to the background noise score and the resolution score, respectively, according to the purpose of use of images. In addition, the controller 400 may determine the ratio η of the intensities of the first STED laser beam STED1 and the second STED laser beam STED2 by obtaining an intensity ratio when a total score defined based on the two scores to which the weights are applied reaches its maximum. This may allow the STED microscope system 10 to obtain an optimal final image FIM in which the two effects described above are implemented in balance.

Specifically, the background noise score and the resolution score may be defined using various parameters of an image PSF. Since the PSF of the final image FIM is formed differently depending on the ratio η of the intensities of the first STED laser beam STED1 and the second STED laser beam STED2, a parameter used to define the background noise score and the resolution score may have, as a variable, the ratio η of the intensities of the first STED laser beam STED1 and the second STED laser beam STED2.

In one embodiment, the background noise score may be defined as a normalized value of a signal-to-background ratio (SBR) of the PSF. In addition, the resolution score may be defined as a value obtained by normalizing a full-width at half maximum (FWHM) of the PSF and then subtracting it from 1.

However, the background noise score and the resolution score are not limited to the foregoing definitions but may be defined in various ways that quantify the effects of background noise suppression and resolution enhancement.

When the weight assigned to the background noise score is defined as a first weight and the weight assigned to the resolution score is defined as a second weight, a sum of the first weight and the second weight is defined to have a constant value of 1, and accordingly, as one increases, the other decreases.

The weights respectively assigned to the background noise score and the resolution score may be selected in various ways depending on the purpose of use of the final image. For example, the controller 400 may select weights based on a table obtained in advance according to the purpose of use of an image. Alternatively, the controller 400 may receive and use weights appropriately selected based on a user's determination for the purpose of use of an image.

To determine the ratio η of the intensities of the first STED laser beam STED1 and the second STED laser beam STED2, the controller 400 may calculate a value of η when the total score calculated by applying the weights to the background noise score and the resolution score, respectively, reaches its maximum. In this case, the controller 400 may calculate the value of η using a numerical analysis method.

The total score may be defined based on the background noise score, the resolution score, and the respective weights. For example, the total score may be obtained by raising each weight to the power of the background noise score and the resolution score and then multiplying respective values, as expressed in Equation 1.

[Equation 1]

$$Q = SBR_{score}^{w_1} \cdot FWHM_{score}^{w_2}$$

In Equation 1, Q denotes the total score,

$SBR_{score}$ denotes the background noise score,
$FWHM_{score}$ denotes the resolution score,
$w_1$
and
$w_2$
represent the weights assigned to the background noise score and the resolution score, respectively. Meanwhile, Equation 1 is an example of the definition of the total score, and the total score may be defined in various modified ways depending on the numerical analysis method and the like.

The ratio η of the intensities of the first STED laser beam STED1 and the second STED laser beam STED2 may be determined as a value of η when the total score calculated by applying the respective weights to the background noise score and the resolution score reaches its maximum. Since the total score is a function with η as a variable, the controller 400 may determine the ratio η of the intensities of the first STED laser beam STED1 and the second STED laser beam STED2 by calculating the value of η when the total score is maximum.

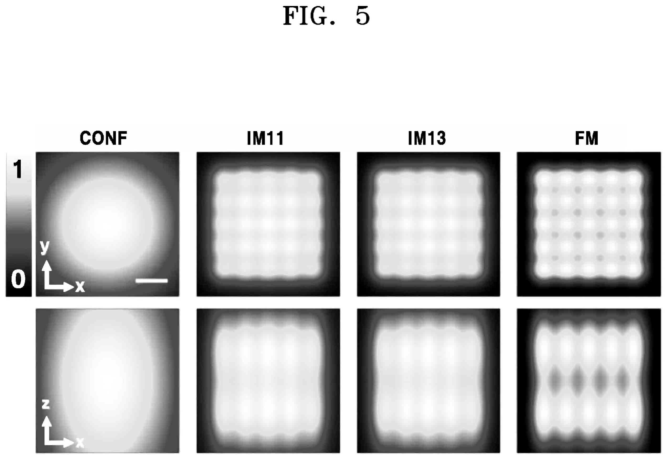

FIG. 5 is a diagram showing a comparison of images obtained through a traditional microscope and the STED

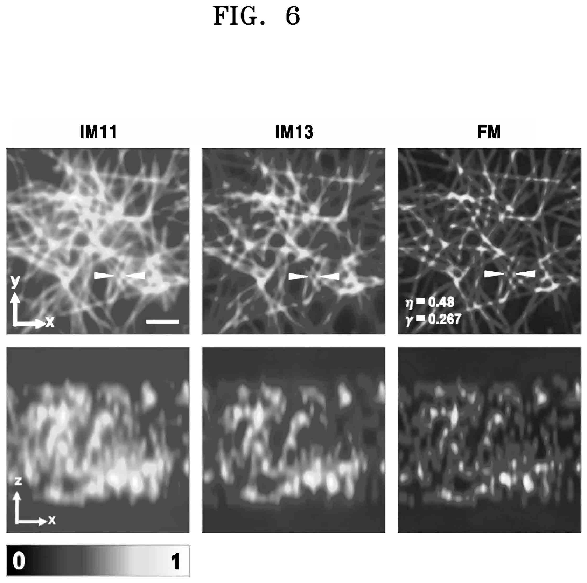

microscope system 10 of FIG. 1, using, as the measurement target SP, fluorescent beads arranged at regular intervals. In addition, FIG. 6 is a diagram showing a comparison of images obtained through a traditional microscope and the STED microscope system 10 of FIG. 1, using, as the measurement target SP, a microtubule sample having a fluorescent material.

Referring to FIG. 5, in an image CONF obtained through a typical confocal microscope, a first main image IM11 obtained through a typical STED microscopy method, and a first STED image IM13 obtained using a first main image IM11 and a first auxiliary image IM12, each fluorescent bead arranged at regular intervals does not appear clearly, but multiple fluorescent beads appear as a single object.

On the other hand, in the final image FIM obtained through the STED microscope system 10 of FIG. 1, each fluorescent bead is identified distinctly. In addition, it may be verified that each fluorescent bead appears more distinctly in the final image FIM obtained through the STED microscope system 10 of FIG. 1, even in an xz direction image in addition to an xy direction image.

Likewise, referring to FIG. 6, in the final image FIM obtained through the STED microscope system 10 of FIG. 1, each microtubule is more clearly identified that in the first main image IM11 obtained through the typical STED microscopy method and the first STED image IM13 obtained using the first main image IM11 and the first auxiliary image IM12. In addition, it may be verified that a cross-section of the microtubule appears more clearly even in the final image FIM of the xz direction than in an image obtained through the typical microscopy method.

It may be verified that the STED microscope system 10 of FIG. 1 has enhanced resolution and background noise suppression capabilities compared to the typical microscope system, and that an axial resolution is also enhanced, allowing for the acquisition of images of enhanced quality.

Using the differential coefficient $\gamma$ and the STED laser beam intensity ratio $\eta$ determined in the STED microscope image processing method, the controller 400 may calculate an FWHM of the PSF of the final image FIM.

First, an FWHM of a general confocal microscope may be calculated as expressed in Equation 2.

[Equation 2]

$$\Delta r_{confocal} \approx 0.45 \frac{\lambda}{n \sin \alpha}$$

Here, n denotes a refractive index of a medium, $\alpha$ denotes a half-angle of light incident on an objective lens, and $\lambda$ denotes a wavelength of light.

An FWHM of a typical STED microscope may be calculated by applying an additional variable to Equation 2, as expressed in Equation 3.

[Equation 3]

$$\Delta r_{STED} \approx 0.45 \frac{\lambda}{n \sin \alpha} \frac{1}{\sqrt{1+\zeta}}$$

Here, $\zeta$ denotes a ratio of an intensity of a STED laser beam to a minimum value of an intensity of a STED laser beam required to deplete fluorescence. Accordingly, it may be learned that the resolution of the STED microscope is enhanced as the intensity of the STED laser beam increases.

In the STED microscope system 10 according to one embodiment of the present disclosure, the controller 400 may calculate the FWHM, as expressed in Equation 4.

[Equation 4]

$$\Delta r_{eff} \approx 0.45 \frac{\lambda}{n \sin \alpha} \frac{1}{\sqrt{1+\left(\frac{1-\gamma\eta}{1-\gamma}\right)\zeta_{st}}}$$

Since both $\gamma$ and $\eta$ are values between 0 and 1, it may thus be learned that, by substituting them into Equation 4 to calculate the FWHM, the STED microscope system 10 of the present disclosure has an enhanced resolution compared to a typical STED microscope.

The STED microscope image processing method of the present disclosure may effectively suppress two types of background noise, DEN and IDN, which may appear in an image obtained by a STED microscope. Simultaneously, it may also enhance image resolution to improve image quality.

As such, the present disclosure has been described with reference to the embodiments illustrated in the accompanying drawings, but these are merely illustrative, and those skilled in the art will understand that various modifications and equivalent other embodiments may be made therefrom. Therefore, the true scope of technical protection of the present disclosure should be determined by the technical spirit of the appended patent claims.

Specific implementations described with reference to the embodiments are examples and do not limit the scope of the embodiments in any way. Furthermore, unless specifically stated as "essential," "important," and the like, a component may not be absolutely necessary for the application of the present disclosure.

The term "the" and similar referents used herein (especially in the appended claims) may be used for both singular and plural cases. In addition, for a range specified in the present disclosure, the range may include individual values included in that range (unless otherwise indicated to the contrary), and respective individual values constituting the range in the detailed description of the disclosure. The steps constituting the method according to the present disclosure may be performed in an appropriate order, if there is no explicit or contrary description of the order of the steps. The present disclosure is not necessarily limited by the order of the steps. The use of all examples or exemplary terms (e.g., such as) in the present disclosure is simply to describe in detail the present disclosure, and the scope of the present disclosure is not limited by these examples or exemplary terms unless limited by the appended claims. In addition, it may be appreciated by those skilled in the art that various modifications, combinations, and changes may be made according to design conditions and factors within the scope of the appended claims and their equivalents.

## Industrial Applicability

Embodiments of the present disclosure provide a STED microscope image processing method and a STED microscope system. In addition, the embodiments of the present disclosure may be applicable to a technology for obtaining and processing microscope images.

## Claims

**1.** A stimulated emission depletion (STED) microscope image processing method, comprising: obtaining a first STED image by using a first main image that is obtained by emitting an excitation laser beam and a first STED laser beam at a measurement target to be measured and using a first auxiliary image that is obtained by emitting only the first STED laser beam at the measurement target;

obtaining a second STED image by using a second main image that is obtained by emitting, at the measurement target, the excitation laser beam and a second STED laser beam with an intensity different from that of the first STED laser beam, and using a second auxiliary image that is obtained by emitting only the second STED laser beam at the measurement target; and

obtaining a final image from which background noise is removed by using the first STED image and the second STED image.

**2.** The STED microscope image processing method of claim 1, wherein the obtaining of the final image comprises:

determining a differential coefficient using the first STED image and the second STED image; and

generating the final image using the differential coefficient, the first STED image, and the second STED image.

**3.** The STED microscope image processing method of claim 2, wherein the generating of the final image comprises:

obtaining a result value from an intermediate image obtained by performing a first operation using the differential coefficient, the first STED image, and the second STED image; and

in response to the result value satisfying a preset criterion, outputting the intermediate image as the final image.

4. The STED microscope image processing method of claim 3, wherein the generating of the final image further comprises: in response to the result value not satisfying the preset criterion, resetting the differential coefficient, and re-obtaining the result value from an intermediate image obtained by re-performing the first operation.

5. The STED microscope image processing method of claim 3,

   wherein the first operation is multiplying the second STED image by the differential coefficient and subtracting it from the first STED image.

6. The STED microscope image processing method of claim 1, further comprising: adjusting a ratio of the intensities of the first STED laser beam and the second STED laser beam based on a background noise score and a resolution score of the final image.

7. The STED microscope image processing method of claim 1, wherein the intensity of the first STED laser beam is greater than the intensity of the second STED laser beam.

8. A stimulated emission depletion (STED) microscope system, comprising:

   a first laser generation unit configured to generate an excitation laser beam;
   a second laser generation unit configured to generate a first STED laser beam and a second STED laser beam with different intensities;
   an optical unit configured to set an optical path so that the excitation laser beam, the first STED laser beam, and the second STED laser beam are emitted at a measurement target to be measured; and
   a controller configured to obtain a final image by controlling operations of the first laser generation unit and the second laser generation unit,
   wherein the controller is configured to:

      obtain a plurality of STED images by emitting, at the measurement target, at least one of the excitation laser beam, the first STED laser beam, or the second STED laser beam; and
      obtain a final image from which background noise is removed, using the plurality of STED images.

9. The STED microscope image system of claim 8, wherein the controller is configured to:

   determine a differential coefficient using the plurality of STED images;
   obtain a result value from an intermediate image obtained by performing a first operation using the differential coefficient and the plurality of STED images; and
   in response to the result value satisfying a preset criterion, output the intermediate image as the final image.

10. The STED microscope image system of claim 9, wherein the controller is configured to: in response to the result value not satisfying the preset criterion, reset the differential coefficient, and re-obtain a result value from an intermediate image obtained by re-performing the first operation.

10
311
312
313
310
321
322
323
320
331
332a
332b
333
330
SP
FL
CON
400
3232
3231
EX
100
200
STED

FIG. 1

FIG. 2

START
OBTAIN FIRST STED IMAGE USING FIRST MAIN IMAGE AND FIRST AUXILIARY IMAGE
S100
OBTAIN SECOND STED IMAGE USING SECOND MAIN IMAGE AND SECOND AUXILIARY IMAGE
S200
OBTAIN FINAL IMAGE FROM WHICH BACKGROUND NOISE IS REMOVED, USING FIRST STED IMAGE AND SECOND STED IMAGE
S300
END

FIG. 3

START
OBTAIN FIRST STED IMAGE USING FIRST MAIN IMAGE AND FIRST AUXILIARY IMAGE
S100
OBTAIN SECOND STED IMAGE USING SECOND MAIN IMAGE AND SECOND AUXILIARY IMAGE
S200
DETERMINE DIFFERENTIAL COEFFICIENT USING FIRST STED IMAGE AND SECOND STED IMAGE
S310
OBTAIN RESULT VALUE FROM INTERMEDIATE IMAGE OBTAINED BY PERFORMING FIRST OPERATION USING DIFFERENTIAL COEFFICIENT, FIRST STED IMAGE, AND SECOND STED IMAGE
S321
S323
RESET DIFFERENTIAL COEFFICIENT
RESET DIFFERENTIAL COEFFICIENT DETERMINE WHETHER RESULT VALUE SATISFIES PRESET CRITERION
NO
YES
OUTPUT INTERMEDIATE IMAGE AS FINAL IMAGE
S322
END

FIG. 4

IM11
FIRST MAIN IMAGE
IM12
FIRST AUXILIARY IMAGE
IM13
FIRST STED IMAGE
FIM
FINAL IMAGE
IM21
SECOND MAIN IMAGE
IM22
SECOND AUXILIARY IMAGE
IM23
SECOND STED IMAGE

FIG. 5

CONF
IM11
IM13
FM
1
0
y
x
z
x

FIG. 6

IM11
IM13
FM
y
x
η = 0.48
γ = 0.267
z
x
0
1

## INTERNATIONAL SEARCH REPORT

International application No. **PCT/KR2024/013602**

**A. CLASSIFICATION OF SUBJECT MATTER**

**G02B 21/36**(2006.01)i; **G06T 5/70**(2024.01)i; **G06T 5/50**(2006.01)i

According to International Patent Classification (IPC) or to both national classification and IPC

**B. FIELDS SEARCHED**

Minimum documentation searched (classification system followed by classification symbols)

G02B 21/36(2006.01); G01N 21/64(2006.01); G01N 23/225(2006.01); G02B 21/00(2006.01); G02B 21/06(2006.01); G02B 21/08(2006.01); G03H 1/04(2006.01); H01J 37/244(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 현미경(microscope), 이미지(image), 잡음(noise), 유도방출억제(stimulated emission depletion), 여기(excitation), 억제(depletion)

**C. DOCUMENTS CONSIDERED TO BE RELEVANT**

| Category* | Citation of document, with indication, where appropriate, of the relevant passages | Relevant to claim No. |
|---|---|---|
| A | KR 10-2016-0126356 A (INDUSTRY-ACADEMIC COOPERATION FOUNDATION, YONSEI UNIVERSITY) 02 November 2016 (2016-11-02)<br>See paragraphs [0030]-[0045], claim 1 and figures 2-3. | 1-10 |
| A | KR 10-1864984 B1 (INDUSTRY-ACADEMIC COOPERATION FOUNDATION, YONSEI UNIVERSITY) 05 June 2018 (2018-06-05)<br>See paragraph [0035]. | 1-10 |
| A | JP 2015-200693 A (HAMAMATSU PHOTONICS K.K.) 12 November 2015 (2015-11-12)<br>See claim 1 and figure 1. | 1-10 |
| A | JP 2023-539435 A (LEICA MICROSYSTEMS CMS G.M.B.H.) 14 September 2023 (2023-09-14)<br>See paragraphs [0048]-[0061]. | 1-10 |
| A | US 2021-0305012 A1 (FEI COMPANY) 30 September 2021 (2021-09-30)<br>See claims 1-4 and figure 1. | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **06 February 2025** | **07 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/013602**

| Patent document cited in search report | Publication date (day/month/year) | Patent family member(s) | Publication date (day/month/year) |
|---|---|---|---|
| KR 10-2016-0126356 A | 02 November 2016 | KR 10-1703543 B1 | 07 February 2017 |
| KR 10-1864984 B1 | 05 June 2018 | None | |
| JP 2015-200693 A | 12 November 2015 | CN 106133580 A | 16 November 2016 |
| | | CN 106133580 B | 12 March 2019 |
| | | DE 112015001640 B4 | 25 February 2021 |
| | | DE 112015001640 C5 | 07 December 2023 |
| | | DE 112015001640 T5 | 09 February 2017 |
| | | JP 6400933 B2 | 03 October 2018 |
| | | US 10168521 B2 | 01 January 2019 |
| | | US 2017-0031145 A1 | 02 February 2017 |
| | | WO 2015-151838 A1 | 08 October 2015 |
| JP 2023-539435 A | 14 September 2023 | CN 116348800 A | 27 June 2023 |
| | | EP 4176298 A1 | 10 May 2023 |
| | | JP 7605962 B2 | 24 December 2024 |
| | | US 2023-0324662 A1 | 12 October 2023 |
| | | WO 2022-028694 A1 | 10 February 2022 |
| US 2021-0305012 A1 | 30 September 2021 | CN 113466273 A | 01 October 2021 |
| | | EP 3901980 A2 | 27 October 2021 |
| | | EP 3901980 A3 | 22 December 2021 |
| | | JP 2021-163756 A | 11 October 2021 |
| | | JP 7499207 B2 | 13 June 2024 |
| | | KR 10-2021-0122161 A | 08 October 2021 |
| | | US 11404241 B2 | 02 August 2022 |

Form PCT/ISA/210 (patent family annex) (July 2022)